# EUROPEAN PATENT APPLICATION

(11) **EP 1 638 089 A2**
(43) Date of publication of application: **22.03.2006**
(21) Application number: 05112194.5
(22) Date of filing: 22.10.2002
(51) Int. Cl.: G11B 7/00

(54) **A method and a system for trading energy contracts in an exchange**

(30) Priority: 11.12.2001 US 12249
(62) Divisional of application: 02778167.3
(71) Applicant: OMX Technology AB, 105 78 Stockholm (SE)
(72) Inventor: Tilfors, Jan, 16774, Stockholm (SE)

(57) **Abstract**

In an exchange trading energy virtual contracts are formed by aggregating particular, standardized contracts, in particular short-period contracts, into any number of contract types. Settlement of the aggregated, virtual, contract is then performed by settling a number of standardized contracts.

## Description

### TECHNICAL FIELD

The present invention relates to an exchange, and in particular to an automated, computerized, exchange designed to automatically match contracts related to delivery of energy, such as electricity or gas.

### BACKGROUND OF THE INVENTION AND PRIOR ART

Trading in energy contracts is in some regards different from trading in other commodity contracts. The main difference is due to the fact that the commodity is to be delivered uniformly over a period of time rather than all at a particular time in the future, as is the case for other future contracts.

Thus, each contract must specify not only the quantity as is the case for conventional commodities, but also the time period over which it is to be delivered. This is different from a conventional contract, which only specifies a particular time. For example if the energy contract is a contract to buy electricity, the contract will specify both the power (e.g. 1 MW) and the time during when it is to be delivered (e.g. during the month of July).

The fact that the contract has to specify not only a time of delivery, but rather a period of time when delivery is to take place has created a liquidity problem in the exchanges trading these types of contracts. Thus, if a buyer wants to buy, for example, electricity for the first week in September, he must find a seller/sellers issuing a corresponding contract to sell that particular time period. Existing exchanges trading energy contracts show that there usually are very few different sellers of a particular contract. The buyer will hence have very few contracts, if any, to chose between when buying a contract.

Another problem associated with trading of energy contracts at conventional exchanges is that the exchanges, in order to at least have some liquidity in the different traded contracts only trades one type of contract for a particular period of time. On the other hand there is a demand from the investors trading at the exchange to trade different types of contracts for the same period of time.

Thus, it is common that the exchanges only trade contracts for long time periods long in advance and only short time periods contracts for time periods in the near future, since there is most liquidity in these contracts. For example, a year in advance of it may only be possible to trade year contracts and possibly month contracts, whereas two months in advance it may only be possible to trade week contract, and perhaps hour contracts.

If an investor wants to trade other contracts this will be impossible. For example, if an investor wants to sell electricity for the month of September in July, he may have to split this trade into three or four different week contracts plus a number of day contracts that needs to be purchased later when day contracts become available at the exchange. This because the only contracts traded for September in July are week contracts. As another example, if an investor wants to buy an electricity contract for a particular day well in advance he may be unable to do so because only contracts for a whole month or a year are traded well in advance.

### SUMMARY

It is an object of the present invention to provide an improved exchange where contracts of all types can be traded simultaneously, and which at the same time improves the liquidity at the exchange.

This object and others are obtained by the present invention as set out in the appended claims.

In accordance with the present invention, contracts are formed by aggregating particular, standardized contracts, in particular short-period contracts, into any number of contract types. Hereby, the liquidity is increased and at the same time the number of contract types traded for a particular time period can be increased without decreasing liquidity. The energy contracts formed can be termed virtual contracts and thus the energy contracts traded are not necessarily the contracts that are finally settled.

Settlement of the aggregated contract is then performed by settling a number of standardized contracts. For example, the exchange can be designed to only perform settlement for electricity contracts for each particular hour, each particular day, and each particular month. These contracts, which are used in settlement form the basis for every contract traded at the exchange.

In order to provide the market with contracts, other than the standardized contracts, the exchange can form a number of virtual contracts, which are deemed to be of interest to invest in. For example, there may be an interest for buying electricity during office hours, etc. The price for such virtual contracts will be the combined prices of the standardized contracts required to form such a virtual contract.

By limiting the number of types of contracts used for pricing all contracts offered at the exchange, the liquidity will be increased and the market place will work more efficiently. Also, it will be possible to trade many more types of contracts at the same time without losing liquidity, since all contracts traded are priced based on the standardized contracts.

Indeed, if an investor want to trade any particular contract, the trade can always take place, provided that there exist a price for all standard contracts required for forming the particular contract.

### BRIEF DESCRIPTION OF THE DRAWINGS

The present invention will now be described in more detail by way of non-limiting examples and with reference to the accompanying drawings, in which:
- Fig. 1 is a general view of an automated, computerized exchange system.
- Fig. 2 is a flow chart illustrating different basic steps carried out when trading a virtual electricity contract.
- Fig. 3 is a diagram illustrating matching when a match between a virtual electricity contract and a calculated virtual electricity contract occurs in accordance with a first trading pattern.
- Fig. 4 is a diagram illustrating matching when a match between a virtual electricity contract and a calculated virtual electricity contract occurs in accordance with a second trading pattern.
- Fig. 5 is a diagram illustrating matching when a match between two virtual electricity contracts occurs.

### DESCRIPTION OF PREFERRED EMBODIMENTS

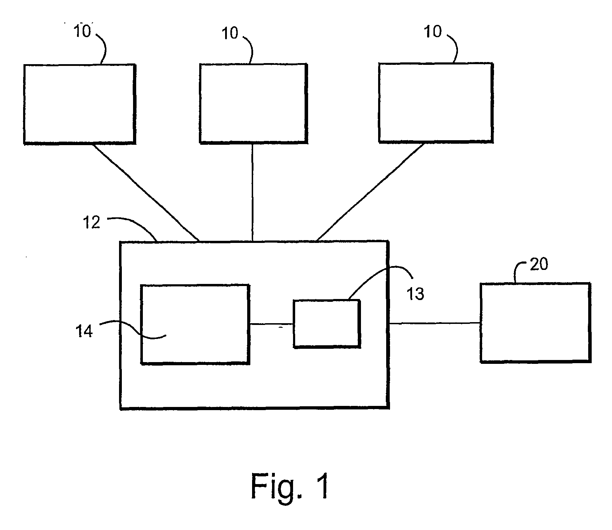

In Fig. 1, a general view of an automated, computerized exchange system is shown. The system comprises a number of remote terminals 10 all connected to a central computer unit 12 comprising a Central Processing Unit (CPU) 13 and a memory 14 associated therewith. The system is also connected to a supplementary sub-system 20 for handling clearing and settlement. The central computer unit 12 being loaded with suitable software, such as the CLICK ® software sold by OM Technology AB, Sweden, forms an automated exchange having all features and functionality of a conventional automated, computerized exchange designed to automatically match bids and offers to the exchange from the remote terminals 10. The remote terminals 10 are designed to send data to and receive data from the central computer 12. The terminals 10 are designed to provide an interface for investors, such as broker firms etc., trading contracts of different kinds at the automated exchange. In particular the system is designed to trade virtual energy contracts, such as virtual electricity contracts as described below. Deals formed by the automatic matching taking place in the system are preferably output and forwarded to the sub-system 20 for sub-sequent clearing and settlement.

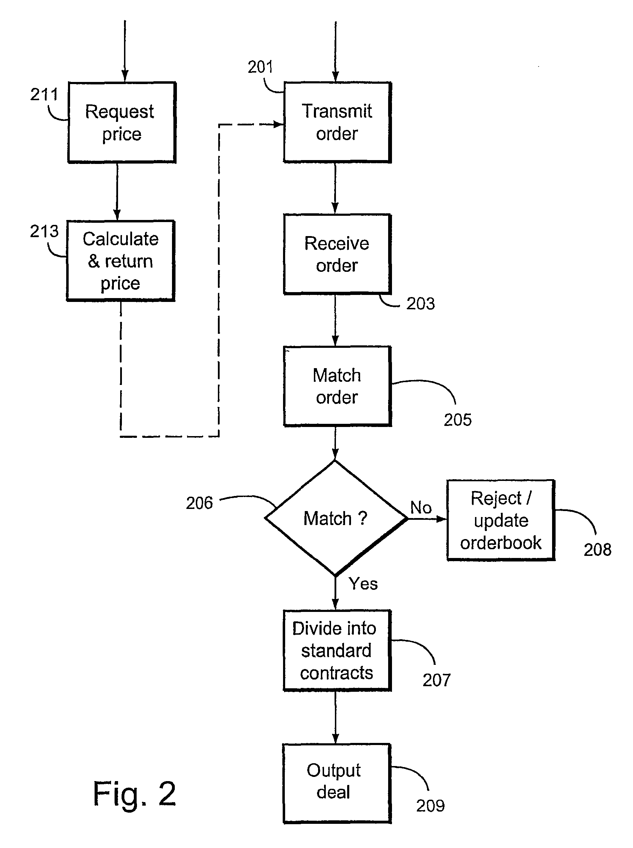

In Fig. 2, a flow chart illustrating different steps carried out in the exchange system as shown in Fig. 1 is shown. In this example it is assumed that the contracts finally settled are one-hour contracts and one-week contracts only. This corresponds to what is traded today at most existing electricity exchanges the months prior to delivery of the electricity. It is further assumed that the orders entered into the system are limit orders, although the system can be designed to handle any type of orders.

Using the existing prices for one-hour and one-week contracts virtual contracts are formed by the exchange for any period of time which the exchange want to display a price for. For example, there may be an interest in the market for trading contracts for an entire month. Bid and Ask prices for an entire month are then generated by aggregating different week and hour contracts forming that particular month, and the price corresponding to these aggregated contracts is displayed.

If an investor want to trade a virtual contract displayed by the exchange, the following steps will take place. First the order transmitted to the exchange, step 201. The order is then received by the exchange, step 203. Next the order is matched, step 205. Thus, if the order has a price, which is equal or better than the current price requested by a counter party there will be a match which is detected by system logic in a step 206, and else the order is rejected or placed in the orderbook, depending on the type of the order, step 208.

If the order is matched as decided in step 206, the order is split up in a way corresponding to the way the price for the virtual contract was calculated, step 207. The different contracts and their corresponding prices resulting from the split in step 207 are then forwarded in a step 209 for further processing, such as settlement and clearing in the sub-system 20 depicted in Fig. 1.

Thus, the contracts matched are the virtual contracts, along with standardized contracts, but in the subsequent processing of the order the actual contracts forming the virtual contracts are used, in this example week and hour contracts. This will ensure a good liquidity in the different contracts, actual as well as virtual and at the same time provide the market with contracts for any particular time period.

As an additional feature of the system as described herein, the price for a virtual contract, which is not displayed by the exchange at a particular time, can be requested by a user of the system. For example, assume that an investor wants to buy electricity for office hours (8 - 18, Monday - Friday) during a particular week, i.e. 50 hours. Assume further that the exchange for some reason is not displaying a current price for such a contract. In that case the following steps may take place before a possible order is sent to the exchange.

First, the investor request prices, step 211. The investor may request Bid price, Ask price or Quote price. The system then based on the input, i.e. the requested time period and the amount calculates the corresponding price(s), and returns the price information to the investor, step 213. Based on the information provided by the exchange the investor may chose to enter an order. The order can be of any type as described above in conjunction with step 201. The subsequent processing is then performed in the same way as described above in conjunction with steps 203 - 209.

In the price dissemination performed after there has been a match it is preferred to disseminate both the price for the virtual contract that was matched as well as the prices for the different contracts constituting the virtual contract.

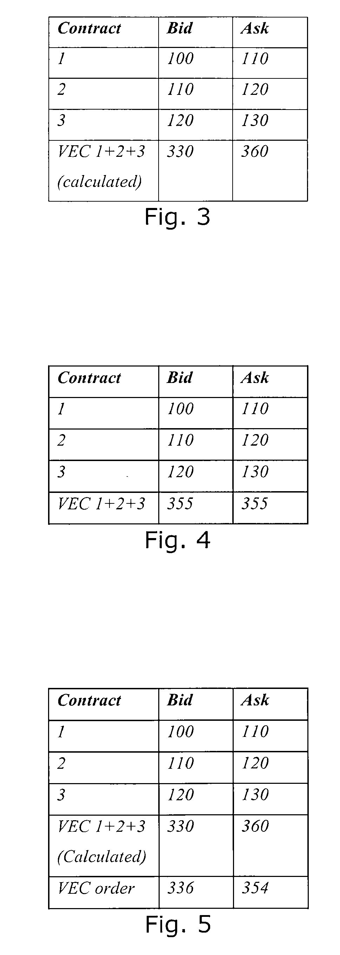

In Fig. 3, a diagram illustrating matching when a match between a virtual electricity contract and a calculated virtual electricity contract occurs in accordance with a first trading pattern is shown. In the case illustrated someone submits an order that match a virtual electricity contract, thereby "hitting" this contract. In the example in Fig. 3 the orderbook displays a calculated Virtual Electricity Contract (VEC) 1+2+3 having a bid price 330 corresponding to the aggregated price of the standard contract prices for the contracts 1, 2 and 3. An incoming order to sell a VEC 1+2+3 at 330 will be matched against this order. The deal will then be reported to the sub-system 20 as depicted in Fig. 1 as 3 standard contracts for subsequent clearing and settlement and the price for the three contracts 1, 2 and 3 will be disseminated and preferably also the price for the VEC 1+2+3.

In Fig. 4, a diagram illustrating matching when a match between a virtual electricity contract and a calculated virtual electricity contract occurs in accordance with a second trading pattern is shown. In the case illustrated someone submits an order that will result in a match between a virtual electricity contract and a calculated virtual electricity contract. In the example in Fig. 4 the orderbook displays a calculated Virtual Electricity Contract (VEC) 1+2+3 having a price 330 corresponding to the aggregated price of the standard contract prices for the contracts 1, 2 and 3. The orderbook further displays a bid order to buy VEC 1+2+3 for the price 355. The calculated ask price for the VEC 1+2+3 is 360. If an order to sell the contract 1 at the price 105 is entered in the orderbook, the calculated ask price for the VEC 1+2+3 will be 355 and it will be matched against the VEC bid order. The deal will then be reported to the sub-system 20 as depicted in Fig. 1 as 3 standard contracts for subsequent clearing and settlement, and the price for the three contracts 1, 2 and 3 will be disseminated and preferably also the price for the VEC 1+2+3.

In Fig. 5, a diagram illustrating matching when a match between two virtual electricity contracts occurs is shown. In the case illustrated someone submits an order that will result in a match between a virtual electricity contract and another virtual electricity contract. In the example in Fig. 5 the orderbook displays a Virtual Electricity Contract (VEC) 1+2+3 having a price 336. The orderbook further displays an ask order to sell VEC 1+2+3 for the price 354. If an order to sell a VEC 1+2+3 at the price 336 is entered in the system, it will be matched against the VEC bid order at the price 336. The deal will then be reported to the sub-system 20 as depicted in Fig. 1 as 3 standard contracts for subsequent clearing and settlement, and the price for the three contracts 1, 2 and 3 will be disseminated and preferably also the price for the VEC 1+2+3.

In a preferred embodiment standardized contracts are matched first with each other (in a conventional manner). In such an implementation, calculated virtual contracts will never match against other calculated virtual contracts.

When implementing the system as described herein it is further preferred to use a very limited number of standard contracts used for pricing other contracts. The number of contracts should preferably be less than five, for example three corresponding to months, weeks/days and hours. In one preferred embodiment the number of standard contracts is limited to only one type of contract, which then preferably corresponds to one-hour contracts or half-hour contracts.

## Claims

1. A computerized system (12) for matching energy contracts, the system (12) being connectable to a multitude of remote terminals (10) for receiving orders to be matched by the system (12) and comprising means (13, 14) for matching orders and storing unmatched orders, the orders relating to a first number of standardized contracts, each comprising a different delivery time period for energy and each being handled separately in the system (12) so that contracts of the same delivery time period are only matched against each other, **characterized in that** the system (12) further comprises means for forming virtual contracts by aggregating a number of the first number of standardized contracts and match virtual contracts with standardized contracts and/or other virtual contracts, thereby enabling the system (12) to match orders relating to contracts having different delivery time periods.

2. A system according to claim 1, wherein each virtual contract is updated by a change in the price(s) of standardized contracts forming the virtual contract.

3. A system according to claim 1 or 2, wherein the number of standardized contracts used for forming virtual contracts is less than five.

4. A system according to claim 1 or 2, wherein the number of standardized contracts used for forming virtual contracts is limited to only one type of standardized contract.

5. A system according to any of claims 1 - 4, wherein one of the number of standardized contracts used for forming virtual contracts corresponds to one-hour contracts or half-hour contracts.

6. A system according to any of claims 1 - 4, wherein the energy contracts are electricity contracts.

7. A method of matching energy contracts in a computerized system comprising means for receiving orders from a multitude of remote terminals, means for matching orders and storing unmatched orders, the orders relating to a first number of standardized contracts, each comprising a different delivery time period for energy and each being handled separately in the system so that contracts of the same delivery time period are only matched against each other, **characterized in that** the method comprises forming virtual contracts by aggregating a number of the first number of standardized contracts and matching virtual contracts with standardized contracts and/or other virtual contracts, thereby enabling the system to match orders relating to contracts having different delivery time periods.

8. A method according to claim 7, wherein the method further comprises updating each virtual contract upon a change in the price(s) of standardized contracts forming the virtual contract.

9. A method according to claim 7 or 8, wherein the method further comprises using less than five types of standardized contracts for forming the virtual contracts.

10. A method according to claim 7 or 8, wherein the method further comprises using only one type of standardized contracts for forming the virtual contracts.

11. A method according to any of claims 7 - 10, wherein the method comprises using one-hour contracts or half-hour contracts as one of the number of standardized contracts used for forming the virtual contract.

12. A method according to any of claims 7 - 10, wherein the energy contracts are electricity contracts.
